(19) Europäisches Patentamt

European Patent Office

Office européen des brevets

(11) **EP 0 622 343 B1**

(12) **EUROPEAN PATENT SPECIFICATION**

(45) Date of publication and mention
of the grant of the patent:
**21.01.1998 Bulletin 1998/04**

(51) Int. Cl.$^6$: **C03C 21/00**, C03C 25/00

(21) Application number: **94302596.5**

(22) Date of filing: **13.04.1994**

(54) **Method for increasing the index of refraction of a glassy material**

Verfahren zur Erhöhung des Brechungsindex von Glas

Méthode pour augmenter d'indice de réfraction de matériau vitreux

(84) Designated Contracting States:
**DE FR GB IT**

(30) Priority: **30.04.1993 US 56329**

(43) Date of publication of application:
**02.11.1994 Bulletin 1994/44**

(73) Proprietor: **AT&T Corp.
New York, NY 10013-2412 (US)**

(72) Inventors:
• **Atkins, Robert Michael
Millington, New Jersey 07946 (US)**
• **Lemaire, Paul Joseph
Madison, New Jersey 07940 (US)**
• **Mizrahi, Victor
Bedminster, New Jersey 07921 (US)**
• **Walker, Kenneth Lee
New Providence, New Jersey 07974 (US)**

(74) Representative:
**Johnston, Kenneth Graham et al
Lucent Technologies (UK) Ltd,
5 Mornington Road
Woodford Green Essex, IG8 OTU (GB)**

(56) References cited:
EP-A- 0 569 182          WO-A-86/01303
US-A- 4 515 612          US-A- 5 235 659

• PROC. SPIE - INT. SOC. OPT. ENG.,
INTERNATIONAL WORKSHOP ON
PHOTOINDUCED SELF-ORGANIZATION
EFFECTS IN OPTICAL FIBER, 11 MAY 1991,
QUEBEC, CA, vol. 1516, 1992 US, pages 185-199,
G. MELTZ ET AL
• ELECTRONICS LETTERS, vol. 29, no. 13, 24
June 1993 pages 1191-1193, LEMAIRE P.J. ET AL
• ELECTRONICS LETTERS, vol. 29, no. 14, 8 July
1993 pages 1234-1235, ATKINS R.M. ET AL
• JOURNAL OF LIGHTWAVE TECHNOLOGY, vol.
7, no. 10, October 1989 NEW YORK US, pages
1530-1539, C.H. HENRY ET AL

## Description

### Field of the Invention

This invention relates to a method for increasing the index of refraction of a glassy material. It is particularly useful in the fabrication of optical devices such as optical waveguides, gratings and lasers.

### Background of the Invention

It is known that in-line optical fiber gratings can be formed by applying two interfering beams of ultraviolet radiation to a glass waveguide structure. See, for example, United States Patents No. 4,807,950 and 4,725,110 which are incorporated herein by reference. Typically these gratings are formed in Ge-doped optical fiber.

The present applicants have discovered and disclosed in the aforementioned parent applications that the index-changing effect of actinic (UV) radiation can be enhanced by treating the glass with hydrogen or deuterium.

See also F. Ouellette et al., Applied Physics Letters, Vol. 58(17), p. 1813 which inter alia discloses that the sensitivity of the Ge-doped fiber to actinic radiation can be enhanced by a thermal hydrogen treatment (4 hours at 400°C in 12 atmospheres of $H_2$). See also G. Meltz et al., SPIE, Vol. 1516, International Workshop on Photoinduced Self-Organization in Optical Fiber, May 10-11, 1991, Quebec City, Canada, paper 1516-18, which reports treating a heavily-doped germanosilicate preform rod for 75 hours at 610°C in 1 atmosphere of $H_2$ to enhance the photosensitivity of the glass. U.S. patent application 643,886, filed January 18, 1991 for R. M. Atkins et al., discloses a process of manufacturing optical fiber that enhances the $GeO/GeO_2$ ratio in the Ge-doped core of the fiber, thereby enhancing the sensitivity of the fiber to actinic radiation. The process involves, exemplarily, collapsing the preform tube in a substantially oxygen-free atmosphere.

The present application is predicated upon the further discovery that in hydrogen or deuterium treated glass (hereinafter generically referred to as hydrogen-treated glass), the index of refraction can be increased not only by actinic radiation, but also by the application of heat.

### Summary of the Invention

The index of refraction of a glassy material is increased by treating the material with hydrogen and applying heat. Specifically, the glass is exposed to hydrogen or deuterium at pressure in the range 96.5 kPa - 75.8 MPa (14-11,000 p.s.i.) and a temperature in the range 21-150°C for a time sufficient for the hydrogen to diffuse into the glass. The glass is then subjected to heat in excess of about 500°C, as by application of a flame or infrared radiation. The duration of heating is preferably a second or less. The result is a substantial and long-lived increase in the normalized refractive index. For example, flame heating of $H_2$ loaded commercial $GeO_2$ doped optical fibers (AT&T Accutether single mode fiber) has produced normalized index changes $\Delta n/n$ of $4 \times 10^{-3}$. This process can be used to make and adjust a variety of optical waveguide devices.

### Brief Description of the Drawings

In the drawings:

FIG. 1 is a block diagram showing the steps of an exemplary process for increasing the index of refraction of a glassy material;

FIGs. 2 and 3 illustrate glass bodies upon which the process can be used; and

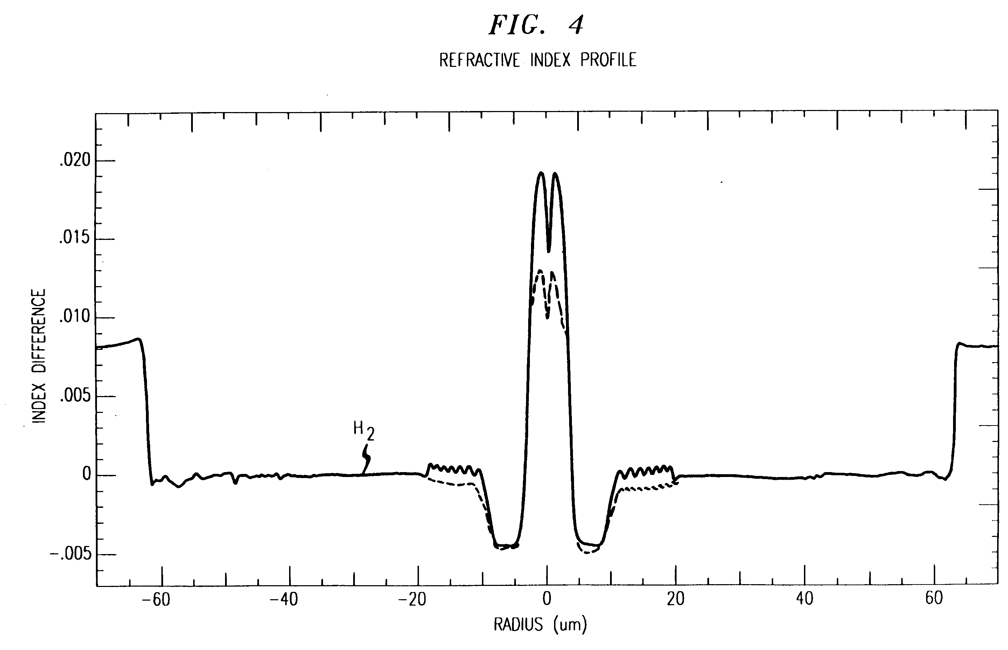

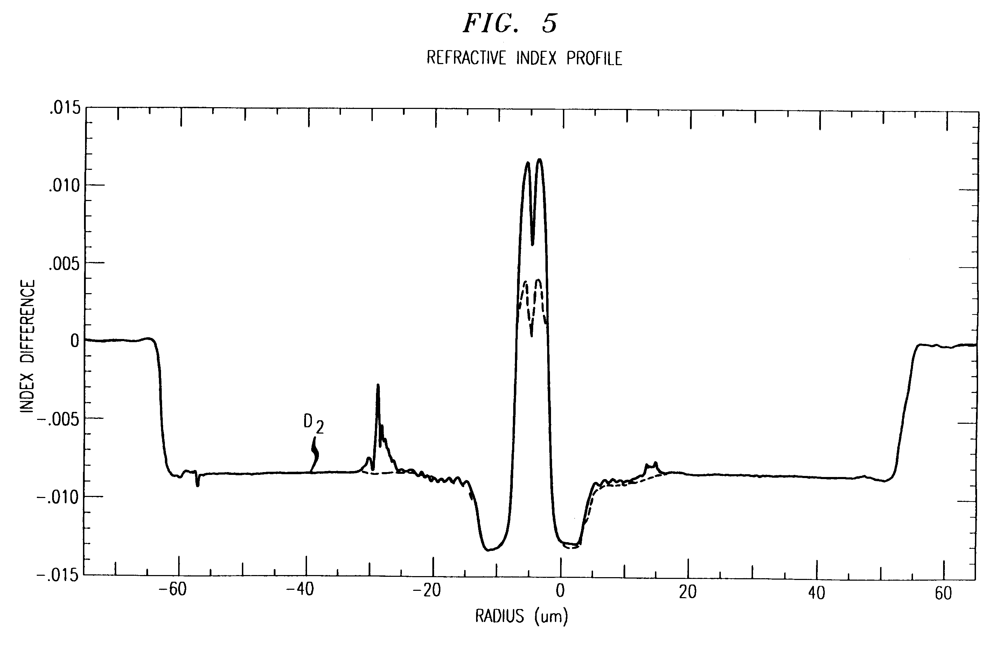

FIGs. 4 and 5 are graphical illustrations demonstrating the effect of the process in altering the index of refraction.

### Detailed Description

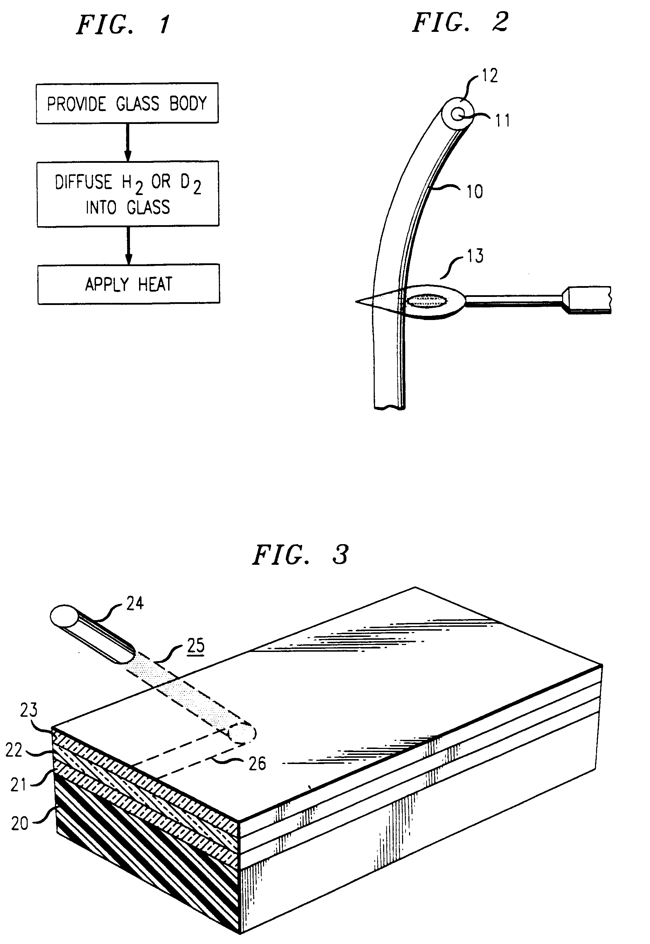

Referring to the drawings, FIG. 1 illustrates the steps of an exemplary process for increasing the index of refraction of a glassy material.

As shown in FIG. 1A, the first step is to provide a body of glass. The body can be any of a wide variety of forms. Forms particularly preferred for this process are illustrated in FIGs. 2 and 3. They include optical fiber and substrate-supported thin layers for planar optical waveguide devices. Preferably the glass is a transparent glass doped with germanium such as $GeO_2$ doped silica. However, the method has been found to work in other types of transparent glass such as P-doped silica and P-Al doped silica. Typical $GeO_2$ concentrations in silica are in the range 3-20 mole % $GeO_2$, with higher index changes observed for higher $GeO_2$ concentrations.

The next step shown in FIG. 1B is to diffuse hydrogen into the glass body at least in those regions whose refractive index is to be increased. Preferably this diffusion is effected by exposing the body to hydrogen (or deuterium) gas at a pressure in the range 96.5 kPa to 75.8 MPa (14-11,000 p.s.i.). Advantageously, the diffusion takes place at low to moderate temperatures in the range 21-150°C.

Diffusion times depend on the temperature and the thickness of the glass to be loaded with hydrogen. Typical diffusion times for standard sized optical fibers are about 12 days at 21°C or about 10 hours at 100°C. More generally, the time required for the $H_2$ loading of a fiber of radius r is proportional to $r^2$ and inversely proportional to the diffusivity of $H_2$ in the glass.

In $GeO_2$ doped glass the amount (mole %) of $H_2$ loaded is believed optimally proportional to the mole % of $GeO_2$ dopant. Typical $GeO_2$ amounts in silica are on the order of 3-20 mole percent. Accordingly, the $H_2$ lev-

els needed to achieve maximum $\Delta n$'s will vary proportionally. Since the heating induced reactions usually occur only at localized portions of the glass body, it is possible to make use of $H_2$ that can diffuse from surrounding areas. For example, for a single mode fiber a significant amount of $H_2$ can diffuse from the cladding material into the $GeO_2$ doped core, thus permitting maximum index changes to be achieved in the core even though the $H_2$ concentration may be less than the $GeO_2$ concentration. It is believed that the pertinent reaction involves one H atom per Ge atom. In fabrication, the amount of loaded hydrogen at equilibrium varies jointly with the pressure of hydrogen and jointly with an exponential factor $\exp\left[\frac{2.07 \text{ Kcal/mole}}{RT}\right]$.

The third step shown in FIG. 1C is to heat the hydrogen-loaded glass. Preferably the glass is heated rapidly to a temperature in excess of about 500°C. Low temperatures on the order of 300°C are ineffective and gradual heating at low temperatures (over several minutes rather than seconds) can cause the hydrogen to diffuse out of the glass without increasing the refractive index.

Any rapid heating method can be used to achieve an index change. Flame heating has been used with optical fibers, and radiative heating, as from a $CO_2$ laser, is advantageous for planar waveguide structures. The heating can be either general or local. Local heating, as by infrared radiation from a focused $CO_2$ laser, can define local regions of enhanced refractive index, thereby defining localized waveguiding structures or adjusting the path length of critical light guiding regions such as laser cavities. Alternatively fiber or waveguide structures can be locally heated at a plurality of periodically spaced points along the pathlength to define a grating structure.

The preferred application of the method is for increasing the refractive index of selected portions of glass fiber or a glass layer to form or modify optical waveguide structures. An optical waveguide generally comprises an elongated glass structure including a core of relatively high refractive index glass and a cladding of lower refractive index glass at least partially surrounding the core. The dimensions of the core are chosen and adapted for transmitting in the longitudinal direction electromagnetic radiation of optical wavelength typically in the range 0.4 to 1.7 micrometers. FIG. 2 illustrates such a waveguiding body in the form of an optical fiber 10 having a central cylindrical core 11 surrounded by a concentric cladding 12. As shown, a convenient way of applying heat to a length of such a fiber is by passing it through a flame 13.

FIG. 3 illustrates a waveguiding body in planar form, typically comprising a substrate 20, a thin cladding layer 21 disposed upon the substrate, a core glass layer 22 on the cladding and a top cladding layer 23. The basic structure of conventional planar waveguides is described in C. H. Henry et al., "Glass Waveguides on Silicon for Hybrid Optical Packaging", 7 J. Lightwave Technol., pp. 1530-39 (1989). Typically, all but a thin stripe of the core layer is etched away prior to application of the top cladding in order to define the waveguiding region, and while the inventive process can be used with such devices (as to define gratings), we have here shown the core glass as a planar layer to illustrate the use of the inventive process in defining waveguide patterns.

As shown, a convenient way to heat selected regions of a planar waveguide structure is to direct a laser 24, such as a $CO_2$ laser, to apply infrared radiation 25 onto selected portions 26 of the structure. Advantageously, one can apply the radiation to selected portions defining a desired waveguide configuration. Thus, the waveguide configuration can be defined by selective heating of the layer 22 without etching. If very fine configurations are desired, a reflective mask such as a layer of gold (not shown) can be placed between the top cladding and the laser so that radiation for heating the core arrives selectively from open regions in the reflective mask.

The operation and applications of the method can be understood in greater detail by consideration of the following specific examples.

Example 1

An AT&T Accutether optical fiber was loaded with $H_2$ to a concentration of about 1.9 mole % $H_2$ and its refractive index profile was measured. A 64 mm length of the fiber was then heated by rapidly passing a small (3mm wide) flame over the fiber in about 12 s. The refractive index profile was again measured.

FIG. 6 is a graphical plot showing the measured index profiles. The dashed line is the profile before heating and the solid line is after heating. The resulting index change in the core glass was $\Delta n = 0.006$. It is noteworthy that the index of the outer P-F doped cladding material ($11 < r < 20 \mu m$) also increased significantly during the heating, demonstrating that heat induced index changes can occur in glasses other than those doped with $GeO_2$.

Example 2

A length of similar fiber was loaded with 2.1 mole % $D_2$ and flame heated. The before and after heating refractive index profiles are shown in FIG. 6. The resultant index change for the core glass was $\Delta n = 0.0075$. This demonstrates that either $H_2$ or $D_2$ can be used to achieve index changes. The advantage of $D_2$ instead of $H_2$ is that $D_2$ avoids the formation of OH, and thus avoids optical losses due to OH absorption. $H_2$, on the other hand, is cheaper than $D_2$ and it is easier to monitor by monitoring OH peak strength. Heating fibers which did not contain dissolved $H_2$ or $D_2$ did not cause measurable index changes.

## Claims

1. A method for increasing the index of refraction of selected portions of a body comprising glass comprising the steps of: providing a body comprising glass; diffusing hydrogen or deuterium into at least the portions of said glass whose refractive index is to be increased; selectively heating said portions of said glass.

2. The method of claim 1 wherein said portions are heated to a temperature in excess of 500°C.

3. The method of claim 1 wherein said diffusing is effected by exposing said glass to said hydrogen or deuterium at a pressure in the range of 96.5 kPa to 75.8 MPa (14-11,000 p.s.i.)

4. The method of claim 1 wherein said diffusing is effected by exposing said glass to said hydrogen or deuterium at a temperature in the range 21-150°C.

5. The method of claim 1 wherein said glass comprises silica doped with $GeO_2$.

6. The method of claim 1 wherein said body comprising glass is an optical fiber.

7. The method of claim 1 wherein said body comprising glass comprises a substrate supported planar layer of glass.

8. The method of claim 1 wherein said portions of said glass are selectively heated by infrared radiation.

9. The method of claim 1 wherein said portions of said glass are selectively heated by flame.

10. The method of claim 1 wherein said glass is silica doped with $GeO_2$ in the range 3-20 mole percent.

## Patentansprüche

1. Verfahren zum Steigern der Brechzahl ausgewählter Teile eines Körpers mit Glas, mit folgenden Schritten:

   Bereitstellen eines Körpers mit Glas;
   Eindiffundieren von Wasserstoff bzw. Deuterium in mindestens die Teile des besagten Glases, deren Brechzahl zu steigern ist;
   gezieltes Erwärmen der besagten Teile des besagten Glases.

2. Verfahren nach Anspruch 1, wobei besagte Teile auf eine 500°C überschreitende Temperatur erwärmt werden.

3. Verfahren nach Anspruch 1, wobei das besagte Eindiffundieren dadurch bewirkt wird, daß das besagte Glas dem besagten Wasserstoff bzw. Deuterium mit einem Druck im Bereich von 96,5 kPa bis 75,8 MPa (14-11.000 psi) ausgesetzt wird.

4. Verfahren nach Anspruch 1, wobei das besagte Eindiffundieren dadurch bewirkt wird, daß das besagte Glas dem besagten Wasserstoff bzw. Deuterium mit einer Temperatur im Bereich von 21-150°C ausgesetzt wird.

5. Verfahren nach Anspruch 1, wobei das besagte Glas mit $GeO_2$ dotiertes Siliciumoxid umfaßt.

6. Verfahren nach Anspruch 1, wobei der besagte Körper mit Glas eine Lichtleitfaser ist.

7. Verfahren nach Anspruch 1, wobei der besagte Körper mit Glas eine auf einem Substrat getragene ebene Schicht von Glas umfaßt.

8. Verfahren nach Anspruch 1, wobei die besagten Teile des besagten Glases gezielt durch Infrarotstrahlung erwärmt werden.

9. Verfahren nach Anspruch 1, wobei die besagten Teile des besagten Glases gezielt durch Flamme erwärmt werden.

10. Verfahren nach Anspruch 1, wobei das besagte Glas mit $GeO_2$ im Bereich von 3-20 Molprozent enthaltendem Siliciumoxid dotiert ist.

## Revendications

1. Méthode pour augmenter l'indice de réfraction de parties sélectionnées d'un corps comprenant du verre comprenant les étapes de:

   fourniture d'un corps comprenant du verre;
   diffusion d'hydrogène ou de deutérium dans au moins les parties dudit verre dont l'indice de réfraction doit être augmenté;
   chauffage sélectif desdites parties dudit verre.

2. Méthode selon la revendication 1, dans laquelle lesdites parties sont chauffées à une température de plus de 500°C.

3. Méthode selon la revendication 1, dans laquelle ladite diffusion est effectuée en exposant ledit verre audit hydrogène ou deutérium à une pression dans la plage de 96,5 kPa à 75,8 MPa (14 à 11.000 p.s.i.)

4. Méthode selon la revendication 1, dans laquelle ladite diffusion est effectuée en exposant ledit verre audit hydrogène ou deutérium à une température dans la plage de 21 à 150°C.

5. Méthode selon la revendication 1, dans laquelle ledit verre comprend de la silice dopée avec du $GeO_2$.

6. Méthode selon la revendication 1, dans laquelle ledit corps comprenant du verre est une fibre optique.

7. Méthode selon la revendication 1, dans laquelle ledit corps comprenant du verre comprend une couche plane de verre supportée par un substrat.

8. Méthode selon la revendication 1, dans laquelle lesdites parties dudit verre sont chauffées sélectivement par rayonnement infrarouge.

9. Méthode selon la revendication 1, dans laquelle lesdites parties dudit verre sont chauffées sélectivement à la flamme.

10. Méthode selon la revendication 1, dans laquelle ledit verre est de la silice dopée avec du $GeO_2$ dans la plage de 3 à 20 pour cent molaires.

## FIG. 1

```
┌─────────────────────────┐
│   PROVIDE GLASS BODY    │
└───────────┬─────────────┘
            │
            ▼
┌─────────────────────────┐
│   DIFFUSE H₂ OR D₂      │
│      INTO GLASS         │
└───────────┬─────────────┘
            │
            ▼
┌─────────────────────────┐
│       APPLY HEAT        │
└─────────────────────────┘
```

## FIG. 2

## FIG. 3

# FIG. 4

## REFRACTIVE INDEX PROFILE

EP 0 622 343 B1

## FIG. 5

### REFRACTIVE INDEX PROFILE